# EUROPEAN PATENT APPLICATION

(11) **EP 4 498 038 A1**
(43) Date of publication of application: **29.01.2025**
(21) Application number: 23773631.9
(22) Date of filing: 10.03.2023
(51) Int. Cl.: G01C 21/00, G05D 1/02, A47L 11/24, G06K 7/00

(54) **METHOD AND APPARATUS FOR MARKING OBSTACLE IN ROBOT MAP**

(30) Priority: 23.03.2022 CN 202210287032
(71) Applicant: Beijing Roborock Innovation Technology Co., Ltd., Beijing 102206 (CN)
(72) Inventor: WANG, Yixing, Beijing 102206 (CN); XIE, Haojian, Beijing 102206 (CN); WANG, Lei, Beijing 102206 (CN); ZHANG, Lei, Beijing 102206 (CN)
(74) Representative: Petraz, Gilberto Luigi
(86) International application number: PCT/CN2023/080879
(87) International publication number: WO 2023/179382

(57) **Abstract**

The present application discloses a method and apparatus for marking an obstacle in a robot map, related to the technical field of intelligent robots, which mainly aim to solve the problem of low accuracy of obstacle position marking in existing robot maps. The method comprises: acquiring a probability map and a height map, the probability map being used to identify a probability distribution of obstacles at positions in a working environment of a robot, and the height map being used to identify a height distribution of the obstacles corresponding to the positions in the working environment of the robot; performing data grouping according to the probability map and the height map, to obtain multiple data sets, each data set identifying obstacle information of one obstacle, and the obstacle information comprising at least obstacle position information and obstacle edge information; and marking the obstacle in a map according to the obstacle information. The method is primarily used to mark an obstacle in a robot map.

## Description

### CROSS-REFERENCE TO RELATED APPLICATION

The present application is based on and claims priority of the Chinese Patent Application No. 202210287032.9, filed on March 23, 2022, which is incorporated herein by reference in its entirety.

### TECHNICAL FIELD

The present application relates to the field of intelligent robots, in particular to a method and apparatus for marking an obstacle in a robot map.

### BACKGROUND

With the continuous development and progress of robot technologies, autonomous mobile robots are gradually applied to various scenarios, such as mining robots, underwater robots, catering robots and sweeping robots. The smooth movement of an autonomous mobile robot is mainly based on an operating environment map, through which paths, obstacles and other information within an operating environment can be expressed. The commonly used methods for constructing robot environment maps include a simultaneous localization and mapping (SLAM) algorithm, a visual simultaneous localization and mapping (vSLAM) algorithm, a satellite map construction method, etc.

However, although the existing sweeping robot has both an autonomous navigation capability and an obstacle recognition capability, the identified obstacle cannot be accurately displayed to a correct position in a robot map. Therefore, marking the correct position of the obstacle in the robot map so as to accurately display the obstacle is an urgent problem to be solved.

### SUMMARY

In view of this, the present application provides a method and apparatus for marking an obstacle in a robot map, which are mainly intended to solve the problem that the accuracy of displaying a position of an obstacle in the existing robot map is relatively low.

According to an aspect of the present application, a method for marking an obstacle in a robot map is provided. The method includes:
acquiring a probability map and a height map, the probability map being configured to identify a probability distribution of obstacles at various positions in a robot operating environment, and the height map being configured to identify a height distribution of the obstacles corresponding to the various positions in the robot operating environment;
performing data grouping according to the probability map and the height map to obtain a plurality of data sets, each data set identifying obstacle information of an obstacle, the obstacle information including at least obstacle position information and obstacle edge information; and
marking the obstacle in the map according to the obstacle information.

Further, prior to acquiring the probability map and the height map, the method further includes:
acquiring an initial probability map and an initial height map of the obstacles;
collecting captured data of a robot during working and parsing the captured data to obtain obstacle data, the captured data including at least image data and height data; and
adjusting the initial probability map and the initial height map according to the obstacle data, determining the adjusted initial probability map as the probability map, and determining the adjusted initial height map as the height map.

Further, after acquiring the probability map and the height map, the method further includes:
extracting a plurality of candidate points in combination with the probability map and the height map and according to a preset probability threshold; and
performing data grouping according to the probability map and the height map to obtain the plurality of data sets includes:
   clustering the plurality of candidate points to obtain a plurality of groups of clustered data, each group of clustered data identifying one of the plurality of data sets. Further, the method further includes:
   acquiring a SLAM map of the robot operating environment, the SLAM map including an unknown region that identifies prohibition of a robot from passing;
   calculating a first region area and a second region area respectively according to the SLAM map and the data set, the first region area being a largest continuous unknown region in the SLAM map, and the second region area being an obstacle floor area identified by the data set; and
   identifying a floor-type obstacle according to the first region area and the second region area, where the robot is prohibited the robot from shuttling inside and outside the floor-type obstacle.

Further, the method further includes:
collecting regions of which the second region area is less than a preset area threshold and which are adjacent in the SLAM map; and
generating a smallest circumscribed polygon corresponding to the collected regions, and determining a region identified by the smallest circumscribed polygon as the floor-type obstacle.

Further, the method further includes:
grouping according to positions of the candidate points in the groups of clustered data, and extracting a first candidate point group, the first candidate point group including the largest number of candidate points;
calculating a smallest circumscribed rectangle corresponding to the candidate points in the first candidate point group; and
updating each group of clustered data according to the smallest circumscribed rectangle for correcting the obstacle information identified by the clustered data. Further, the method further includes:
parsing the SLAM map to obtain an obstacle orientation; and
marking the obstacle in the map according to the obstacle information includes:
   marking the obstacle in the map according to an obstacle position, an obstacle edge and the obstacle orientation.

Further, the method further includes:
when second region areas having an overlap, determining whether the obstacles corresponding to the overlapped second region areas have an enclosing relationship according to the overlapped second region areas; and
when the obstacles corresponding to the overlapped second region areas do not have an enclosing relationship, optimizing the data sets of the obstacles corresponding to the overlapped second region areas.

Further, marking the obstacle in the map according to the obstacle information includes:
when the obstacles corresponding to the overlapped second region areas have the enclosing relationship, marking the obstacle in the map according to the enclosing relationship and the obstacle information.

According to another aspect of the present application, an apparatus for marking an obstacle in a robot map is provided. The apparatus includes:
a first acquiring module configured to acquire a probability map and a height map, the probability map being configured to identify a probability distribution of obstacles at various positions in a robot operating environment, and the height map being configured to identify a height distribution of the obstacles corresponding to the various positions in the robot operating environment;
a first grouping module configured to perform data grouping according to the probability map and the height map to obtain a plurality of data sets, each data set identifying obstacle information of an obstacle, the obstacle information including at least obstacle position information and obstacle edge information; and
a marking module configured to mark the obstacle in the map according to the obstacle information.

Further, the apparatus further includes:
a second acquiring module configured to acquire an initial probability map and an initial height map of the obstacles;
a collecting module configured to collect captured data of a robot during working;
a first parsing module configured to parse the captured data captured by the capturing module to obtain obstacle data, the captured data including at least image data and height data;
an adjusting module configured to adjust the initial probability map and the initial height map according to the obstacle data; and
a determining module configured to determine the adjusted initial probability map as the probability map, and determine the adjusted initial height map as the height map.

Further, the apparatus further includes:
an extracting module configured to extract a plurality of candidate points in combination with the probability map and the height map and according to a preset probability threshold; and
a clustering module configured to cluster the plurality of candidate points to obtain a plurality of groups of clustered data, each group of clustered data identifying one of the plurality of data sets.

Further, the apparatus further includes:
a third acquiring module configured to acquire a SLAM map of the robot operating environment, the SLAM map including an unknown region that identifies the prohibition of the robot from passing;
a first calculating module configured to calculate a first region area and a second region area respectively according to the SLAM map and the data set, the first region area being a largest continuous unknown region in the SLAM map, and the second region area being an obstacle floor area identified by the data set; and
an identifying module configured to identify a floor-type obstacle according to the first region area and the second region area, wherein the robot is prohibited from shuttling inside and outside the floor-type obstacle.

Further, the apparatus further includes:
a collecting module configured to collect regions of which the second region area is less than a preset area threshold and which are adjacent in the SLAM map; and
a generating module configured to generate a smallest circumscribed polygon corresponding to the collected regions, and determine a region identified by the smallest circumscribed polygon as the floor-type obstacle.

Further, the apparatus further includes:
a second grouping module configured to group according to positions of the candidate points in the groups of clustered data, and extract a first candidate point group, the first candidate point group including the largest number of candidate points;
a second calculating module configured to calculate a smallest circumscribed rectangle corresponding to the candidate points in the first candidate point group; and
an updating module configured to update each group of clustered data according to the smallest circumscribed rectangle for correcting the obstacle information identified by the clustered data.

Further, the apparatus further includes a second analysis module, wherein
the second parsing module is configured to parse the SLAM map to obtain an obstacle orientation; and
the marking module is configured to mark the obstacle in the map according to an obstacle position, an obstacle edge and the obstacle orientation.

Further, the apparatus further includes:
a determining module configured to, when second region areas have an overlap, determine whether the obstacles corresponding to the overlapped second region areas have an enclosing relationship according to the overlapped second region areas; and
an optimizing module configured to, when the obstacles corresponding to the overlapped second region areas do not have the enclosing relationship, optimize the data sets of the obstacles corresponding to the overlapped second region areas.

Further, the marking module is configured to, when the obstacles corresponding to the overlapped second region areas have the enclosing relationship, mark the obstacle in the map according to the enclosing relationship and the obstacle information.

According to yet another aspect of the present application, there is provided a non-transitory storage medium configured to store at least one executable instruction therein, the executable instruction causing a processor to perform operations corresponding to the method for marking an obstacle in a robot map as described above.

According to still another aspect of the present application, there is provided a terminal, including a processor, a memory, a communication interface and a communication bus, wherein the processor, the memory and the communication interface complete communication with each other through the communication bus; and
the memory is configured to store at least one executable instruction, the executable instruction causing the processor to perform operations corresponding to the method for marking an obstacle in a robot map as described above.

The present application provides a method and apparatus for marking an obstacle in a robot map. Compared with the prior art, the method according to the embodiment of the present application includes: acquiring a probability map and a height map, the probability map being configured to identify a probability distribution of obstacles at various positions in a robot operating environment, and the height map being configured to identify a height distribution of the obstacles corresponding to the various positions in the robot operating environment; performing data grouping according to the probability map and the height map to obtain a plurality of data sets, each data set identifying obstacle information of one obstacle, the obstacle information including at least obstacle position information and obstacle edge information; and marking the obstacle in the map according to the obstacle information. Therefore, the position information and edge information of the obstacle in the operating environment can be identified according to the probability distribution and height distribution data of the obstacle in the robot operating environment, and the obstacle is marked in the robot map according to the position information and edge information of the obstacle. Since the obstacle edge can identify whether the obstacle is a floor-type obstacle or a non-floor-type obstacle, the obstacle can be accurately marked in the robot map.

The above description is only a summary of the technical solutions of the present application. In order to understand the technical means of the present application more clearly, it can be implemented according to the content of the description. In addition, in order to make the above-mentioned and other objects, features and advantages of the present application more clearly understood, the specific implementations of the present application are provided below.

### BRIEF DESCRIPTION OF THE DRAWINGS

By reading the following detailed description of preferred implementations, various other advantages and benefits will become clear to those of ordinary skill in the art. The accompanying drawings are only for the purpose of illustrating preferred implementations, but are not considered to be limitations of the present application. Throughout the accompanying drawings, the same reference symbols generally refer to the same components. In the drawings:
FIG. 1 shows a flowchart of a method for marking an obstacle in a robot map according to an embodiment of the present application.
FIG. 2 shows a flowchart of another method for marking an obstacle in a robot map according to an embodiment of the present application.
FIG. 3 shows a composition block diagram of an apparatus for marking an obstacle in a robot map according to an embodiment of the present application.
FIG. 4 shows a composition block diagram of another apparatus for marking an obstacle in a robot map according to an embodiment of the present application.
FIG. 5 shows a schematic structural diagram of a terminal according to an embodiment of the present application.

### DETAILED DESCRIPTION

The exemplary embodiments of the present disclosure are described in detail below with reference to the accompanying drawings. Although the exemplary embodiments of the present disclosure are shown in the accompanying drawings, it should be understood that the present disclosure may be implemented in various forms and should not be limited by the embodiments described herein. On the contrary, these embodiments are provided to enable a more thorough understanding of the present disclosure, and to be able to convey the full scope of the present disclosure to those skilled in the art.

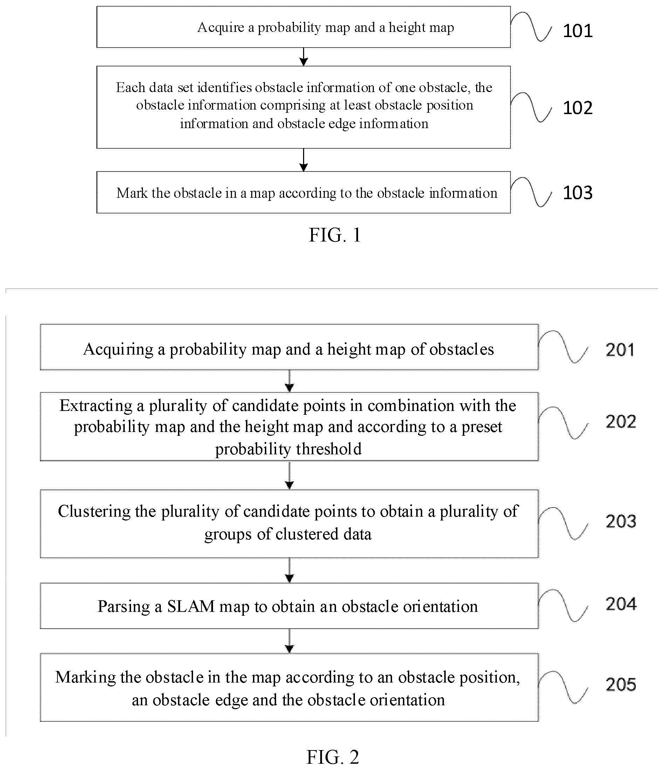

However, although the existing sweeping robot has both an autonomous navigation capability and an obstacle recognition capability, it is an urgent problem to mark a correct position of an obstacle in a robot map so that the obstacle can be displayed accurately. An embodiment of the present application provides a method for marking an obstacle in a robot map. In some embodiments, the method may be performed by a terminal, which may be an intelligent robot device such as a sweeping robot. As shown in FIG. 1, the method includes steps 101, 102, and 103.

101, acquiring a probability map and a height map.

The probability map is configured to identify a probability distribution of obstacles at various positions in a raster map of a robot operating environment, and the height map is configured to identify a height distribution of the various positions in the raster map of the robot operating environment. The obstacle may be a floor-type obstacle, that is, an obstacle unavailable for the robot to shuttle at the bottom thereof, e.g., a wardrobe or a washing machine. Alternatively, the obstacle may be a non-floor-type obstacle, that is, at least part of the obstacle body is suspended, and thus the robot can normally operate in the suspended part of the obstacle and shuttle inside and outside the obstacle. In an embodiment of the present application, for the two types of obstacles, i.e., the floor-type obstacle and the non-floor-type obstacle, two types of probability maps and height maps may also be acquired.

Further, the probability map reflects a probability of existence of an obstacle at each position in the raster map of the robot operating environment. On the probability map, a region with a larger probability value indicates a larger probability of an obstacle being placed at this position, and conversely, a region with a smaller probability value indicates a smaller probability of an obstacle being placed at this position. Similarly, the height map reflects a distribution of heights corresponding to the various positions in the raster map of the robot operating environment. However, it should be noted that the obstacle's probability map and height distribution map can only identify the approximate distribution of positions and heights of the obstacles in the operating environment. If an obstacle is to be displayed in the robot map, data such as the specific position and the edge position of the obstacle needs to be learnt. Therefore, the probability map and the height map are first acquired in the embodiments of the present application, so that data for displaying the obstacle in the map may be obtained by further processing according to the maps.

102, performing data grouping for the obstacles according to the probability map and the height map to obtain a plurality of data sets.

Each data set identifies obstacle information of an obstacle, and the obstacle information includes at least obstacle position information and obstacle edge information.

Specifically, this step may include: extracting position points that can identify an obstacle according to the probability map and the height map, and then determining the obstacle as an obstacle in the current operating environment according to a region range corresponding to the extracted position points, but is not limited thereto. Similarly, the data sets in this step may also be distinguished into data sets identifying floor-type obstacles and data sets identifying non-floor-type obstacles. Each data set may also be configured with identification information for identifying an obstacle, such as an obstacle name and an obstacle number, as well as room identification information where the obstacle is located, obstacle type information, etc., so that the obstacle identified by each data set can be accurately marked according to this data set.

103, marking the obstacle in the map according to the obstacle information.

By performing data grouping based on the probability map and the height map to obtain a data set which can identify information such as the position and edge of each obstacle, the obstacles may be plotted based on the data sets and marked in the map for subsequent displaying. Specifically, the method for displaying the map may be a method for displaying a map in the prior art, which will not be specifically limited in the embodiments of the present application.

The present application provides a method and apparatus for marking an obstacle in a robot map. Compared with the prior art, the embodiment of the present application includes: acquiring a probability map and a height map, the probability map being configured to identify a probability distribution of obstacles at various positions in a robot operating environment, and the height map being configured to identify a height distribution of the obstacles corresponding to the various positions in the robot operating environment; performing data grouping according to the probability map and the height map to obtain a plurality of data sets, each data set identifying obstacle information of one obstacle, the obstacle information including at least obstacle position information and obstacle edge information; and marking the obstacle in the map according to the obstacle information. Therefore, the position information and edge information of the obstacle in the operating environment can be identified according to the probability distribution and height distribution data of the obstacle in the robot operating environment, and the obstacle is marked in the robot map according to the position information and edge information of the obstacle. Since the obstacle's edge can identify whether the obstacle is a floor-type obstacle or a non-floor-type obstacle, the obstacle can be accurately marked in the robot map.

Further, as a refinement and expansion of the specific implementation of the above embodiment, in order to fully illustrate the specific implementation process of the present embodiment, another method for marking an obstacle in a robot map is provided. In some embodiments, the method may be performed by a terminal, which may be an intelligent robot device such as a sweeping robot. As shown in FIG. 2, the method includes steps 201, 202, 203, 204, and 205.

201, acquiring a probability map and a height map of obstacles.

The probability map is configured to identify a probability distribution of obstacles at various positions in a robot operating environment, and the height map is configured to identify a height distribution of the obstacles corresponding to the various positions in the robot operating environment. For the conceptual explanation and specific implementation of this step, reference may be made to the corresponding description in the above step 101, which will not be repeated in the embodiments of the present application.

It should be noted that the robot in the embodiment of the present application is a robot having both a picture-taking function and a ranging function. The ranging of the robot may be implemented by means of any one of a binocular camera, structured light, time of flight (TOF), laser direct structuring (LDS), etc., which will not be limited in the embodiments of the present application. The robot can identify the types of obstacles encountered during walking by taking pictures, and can draw a conclusion that an object exists/does not exist at a distance from its current position, in a certain direction on the ground plane, or at a certain height, through ranging.

In the embodiment of the present application, prior to step 201, the method may further include: acquiring an initial probability map and an initial height map of obstacles; collecting captured data of the robot during working and parsing the captured data to obtain obstacle data; and adjusting the initial probability map and the initial height map according to the obstacle data, determining the adjusted initial probability map as the probability map, and determining the adjusted initial height map as the height map.

The captured data includes at least image data and height data. The initial probability map and the initial height map of obstacles may be respectively generated for two types of obstacles, namely, floor-type obstacles and non-floor-type obstacles, according to prior probability and height.

Further, when the robot operates in the operating environment, it continuously takes pictures and identifies obstacles included in the pictures according to picture data. For picture data of each frame of picture and for two types of obstacles, the obstacle data obtained after parsing only identifies two situations: the absence of any type of obstacles, or the presence of one/two types of obstacles. In the absence of any type of obstacles, probability values of a field of view range and a depth of field range identified by this frame of image at a corresponding position in the probability map are reduced. In the presence of one/two types of obstacles, a probability value of a range identified by this frame of image at a corresponding position in the probability map is increased. In addition, a probability value in an appropriate region in the direction away from the robot on the probability map can be increased according to prior situations of different types of obstacles, so as to obtain an accurate probability map of obstacles.

For the height map, the robot may continuously capture height data of the obstacles while operating in the operating environment, and project the same onto the height map. A plurality of height intervals may be set apriori in the initial height map. When the robot captures the height data of the obstacles, it may map the height data into the initial height map according to the positions of the obstacles. If the height data is within the preset height intervals, the height distribution probability at the current position and the current height is increased, and vice versa, so as to obtain an accurate height map of obstacles. The method for acquiring the height data of the obstacles and the method for mapping the acquired height data to the height map are not limited in the embodiments of the present application.

In the embodiment of the present application, the initial probability map and the initial height map of the obstacle are created first, and the data sets identifying the obstacle information are optimized according to the image and height data captured by the robot so as to obtain data sets that can identify the probability of the existence of various types of obstacles at specified positions and whether an obstacle exists at a specified position and within a specified height range, and a probability map and a height map are generated according to the data sets, thereby ensuring the accuracy of the map data, and in turn promoting the accuracy of marking the obstacle in the robot map.

202, extracting a plurality of candidate points in combination with the probability map and the height map and according to a preset probability threshold.

The preset probability threshold may be set according to the types of obstacles and different application scenarios. For each type of obstacles, all points each having a probability value on the probability map exceeding a preset threshold and a probability on the height map exceeding a preset threshold are collected as candidate points. The preset threshold in the probability map and the preset threshold in the height map may be the same or different, and may take different values according to the different types of obstacles, which will not be specifically limited in the embodiments of the present application.

It should be noted that by extracting the candidate points in combination with the probability map and the height map, the candidate points may be extracted based on multi-dimensional data in the embodiment of the present application, thereby ensuring the accuracy of data processing.

203, clustering the plurality of candidate points to obtain a plurality of groups of clustered data.

Each group of clustered date identifies one data set, i.e., identifies obstacle information of one obstacle, in which the obstacle information includes at least obstacle position and obstacle edge.

In the embodiments of the present application, for any two candidate points, if a straight-line distance between the two candidate points is less than a certain threshold, the two candidate points are considered to belong to the same category. For any two candidate points, if a path without obstacle or other obstruction exists for the two candidate points on a SLAM (simultaneous localization and mapping) map, and the distance of the shortest path among all paths is less than a certain threshold, the two candidate points are considered to belong to the same category. For any two candidate points, when an obstacle (such as a wall) exists between the two candidate points, the two candidate points are considered not to belong to the same category.

In addition, after a plurality of clustered data is obtained by clustering, a range identified by each clustered data may be predicted first. When this range exceeds a reasonable obstacle range, the clustered data may be determined as abnormal data and then deleted to ensure the accuracy of the obstacle data.

Further, in order to display the obstacle in the robot map, the method according to the embodiment of the present application further includes: acquiring a SLAM map of the robot operating environment; calculating a first region area and a second region area respectively according to the SLAM map and the data set; and identifying a floor-type obstacle according to the first region area and the second region area. The SLAM map includes an unknown region that identifies the prohibition of the robot from passing. The first region area is a largest continuous unknown region in the SLAM map, and the second region area is an obstacle floor area identified by the data set. The robot is prohibited from shuttling inside and outside the floor-type obstacle.

Specifically, the method for determining whether the obstacle is a floor-type obstacle according to the data set obtained by clustering may include:
1) determining whether a ratio of the first region area to the second region area is greater than a threshold A;
2) determining whether the ratio of the first region area to the second region area is greater than a threshold B (B<A), and whether a ratio of one or more sides in a polygon corresponding to the largest continuous unknown region to a sectional segment of a straight line where this side is located within a range identified by the clustered data is greater than a certain threshold; and
3) determining whether the ratio of the first region area to the second region area is greater than a threshold C (C<A), and whether a ratio of the number of candidate points contained in the largest continuous unknown region to the number of candidate points contained in the range identified by the clustered data is greater than a certain threshold.

When the determination is made based on a certain data set and the data set satisfies the above conditions, the obstacle identified by this data set is considered to be a floor-type obstacle. The threshold in each determination step may be determined on the basis of prior data, which will not be specifically limited in the embodiments of the present application. It should be noted that the floor-type obstacle is an obstacle for a cleaning robot, that is, the robot needs to avoid the floor-type obstacle during movement so as to smoothly perform a cleaning task. Therefore, in the embodiment of the present application, candidate points are extracted according to the obstacle probability map and height map in the operating environment, clustered, etc., and obstacles of a floor type are further determined, such that these obstacles are marked and displayed in the form of floor-type obstacles, thereby ensuring the accuracy of obstacle type marking and displaying, and providing reliable map data for the movement of the robot in the operating environment.

Further, the method according to the embodiment of the present application further includes: collecting regions of which the second region area is less than a preset area threshold and which are adjacent in the SLAM map; and generating a smallest circumscribed polygon corresponding to the collected regions, and determining a region identified by the smallest circumscribed polygon as the floor-type obstacle.

It should be noted that for an obstacle with a plurality of obstacle legs, such as a table and a chair, the positions of the obstacle supporting legs of such an obstacle are displayed as obstacles for the obstacle on the SLAM map, but the remaining body except for the supporting legs of the obstacle is suspended, so this obstacle is a non-floor-type obstacle. Considering that a cross-sectional area of such a supporting leg is relatively small, data sets identifying the obstacle supporting legs may be generated according to all directly adjacent data points within a clustering range on the SLAM map. Each obstacle supporting leg data set identifies one supporting leg with a certain sectional area. The data sets are screened according to an area threshold set apriori. That is, supporting leg data sets that are less than the preset area threshold are extracted. The positions and floor areas of the plurality of supporting legs of the obstacle can be obtained according to the supporting leg data sets obtained by screening. Further, a smallest circumscribed polygon corresponding to the plurality of supporting legs is calculated, and then verified. If it is within a preset range, this smallest circumscribed polygon may be determined as the floor area of the obstacle, such that the floor area and the obstacle supporting part of the non-floor-type obstacle can be accurately marked and displayed. The supporting leg's height and the suspended body's height of such a non-floor-type obstacle may be determined based on the height data captured by the robot, which will not be specifically limited in the embodiments of the present application.

Further, in order to accurately identify the position of an obstacle placed against a wall, the method according to the embodiment of the present application further includes: grouping according to the positions of the candidate points in the groups of clustered data, and extracting a first candidate point group, the first candidate point group including a largest number of candidate points; calculating a smallest circumscribed rectangle corresponding to the candidate points in the first candidate point group; and updating each group of clustered data according to the smallest circumscribed rectangle for correcting the obstacle information identified by the clustered data.

For an obstacle not placed against a wall, there are at least two surfaces that can be sensed by the robot. However, in the actual obstacle scenario, for some floor-type obstacles, there are at least two surfaces placed against a wall or blocked by other obstacles, and the robot may only sense one surface of such an obstacle during movement. Therefore, for such an obstacle, the candidate points in the obstacle data set of the obstacle are grouped and the candidate points that are directly adjacent or close to each other are grouped into one group. For the group including the largest number of candidate points, the smallest circumscribed rectangle corresponding to this group is calculated, and the data in the obstacle data set is updated based on the circumscribed rectangle. Specifically, if a short side of this rectangle is less than a certain threshold and a long side is greater than a certain threshold, or a ratio of the short side to the long side of the rectangle satisfies a certain threshold, this obstacle is determined to be an obstacle with only one surface that the robot can sense, that is, this obstacle is an obstacle placed against the wall. In this case, the obstacle range lies in that the long side of this rectangle is taken as one side, and the other side takes a priori length according to the actual obstacle situation or a length of a certain proportion of the known long side according to the actual obstacle situation. Then, whether a supporting point exists in the obstacle range is determined in combination with the SLAM map or height map. If no supporting point exists in the obstacle range, the obstacle range is appropriately narrowed, so that the narrowed obstacle range conforms to a conventional obstacle range and has a supporting point.

Further, the obstacle range may be narrowed or expanded according to market research data and life experience, and various types of obstacle range values set apriori. In the case of narrowing, for an obstacle placed against a wall, the obstacle range may be narrowed in a reasonable direction based on wall information. For an obstacle that cannot be determined or is not placed against a wall, the obstacle range can be reversely narrowed close to the center. In the case of expansion, the obstacle range can be expanded outward from the center of the obstacle range, and the expanded obstacle range can be limited to avoid conflicts with an obstacle such as a wall in combination with the SLAM map information. If the obtained obstacle range is much larger than or much smaller than a reasonable obstacle range, the obstacle data may be determined to be abnormal and then deleted. If the obtained obstacle range is slightly smaller or slightly larger than the reasonable obstacle range, the obstacle range may be adjusted to the reasonable obstacle range.

204, parsing the SLAM map to obtain an obstacle orientation.

Specifically, in this step, the obstacle orientation may be determined according to the parsing result and in combination with a variety of scenarios in practical application. For an obstacle (e.g., a wardrobe) whose surface in use can be observed from the robot's perspective, an orientation of such an obstacle may be determined according to image data uploaded by the robot. For an obstacle placed against a wall, the orientation may be determined in combination with SLAM map status, and comprehensively determined based on whether the obstacle is placed against a wall in the SLAM map, the size of the obstacle, etc. In addition, for some obstacles (e.g., a dining table) having no obstacle orientation, the display of the orientations of such obstacles can be ignored.

In the embodiment of the present application, there is no sequential relationship between the acquisition of the obstacle orientation through parsing and the above-mentioned optimization of the obstacle information, i.e., adjustment of the obstacle range. That is, according to different application scenarios, the obstacle orientation may be determined first and then the obstacle range may be adjusted, or the obstacle range may be adjusted first and then the obstacle orientation may be determined. Alternatively, obstacle data in the two dimensions may also be dynamically adjusted during calculation, so as to obtain a plurality of adapted data sets identifying obstacles.

205, marking the obstacle in the map according to the obstacle position, the obstacle edge and the obstacle orientation.

Further, the method according to the embodiment of the present application may further include: when second region areas has an overlap, determining whether the obstacles corresponding to the overlapped second region areas have an enclosing relationship according to the overlapped second region areas; when the obstacles corresponding to the overlapped second region areas do not have the enclosing relationship, optimizing the data sets of the obstacles corresponding to the overlapped second region areas; and when the obstacles corresponding to the overlapped second region areas have the enclosing relationship, marking the obstacle in the map according to the enclosing relationship and the obstacle information.

It should be noted that when the obstacles identified by two obstacle data sets have a large-scale overlap, the two obstacles may have errors at one or two obstacle positions or have an enclosing relationship (e.g., a sofa and a tea table). Therefore, in this step, whether the two obstacles have an enclosing relationship is determined first. **In** the case that the two obstacles have an enclosing relationship, they are displayed by making appropriate adjustments according to their corresponding enclosing positions. **In** the case that the two obstacles do not have an enclosing relationship, two sets of obstacle data may be optimized according to an overlapping direction of the two obstacles. For example, the boundaries of the two obstacles may be narrowed to appropriate positions in a direction opposite to the overlapping direction, so that the obstacles may be displayed according to the optimized obstacle information.

The present application provides a method and apparatus for marking an obstacle in a robot map. Compared with the prior art, the method according to the embodiment of the present application includes: acquiring a probability map and a height map, the probability map being configured to identify a probability distribution of obstacles at various positions in a robot operating environment, and the height map being configured to identify a height distribution of the obstacles corresponding to the various positions in the robot operating environment; performing data grouping according to the probability map and the height map to obtain a plurality of data sets, each data set identifying obstacle information of one obstacle, the obstacle information including at least obstacle position information and obstacle edge information; and marking the obstacle in the map according to the obstacle information. Therefore, the position information and edge information of the obstacle in the operating environment can be identified according to the obstacle's probability distribution and height distribution data in the robot operating environment, and the obstacle can be marked in the robot map according to the position information and edge information of the obstacle. Since the obstacle edge can identify whether the obstacle is a floor-type obstacle or a non-floor-type obstacle, the obstacle can be accurately marked in the robot map.

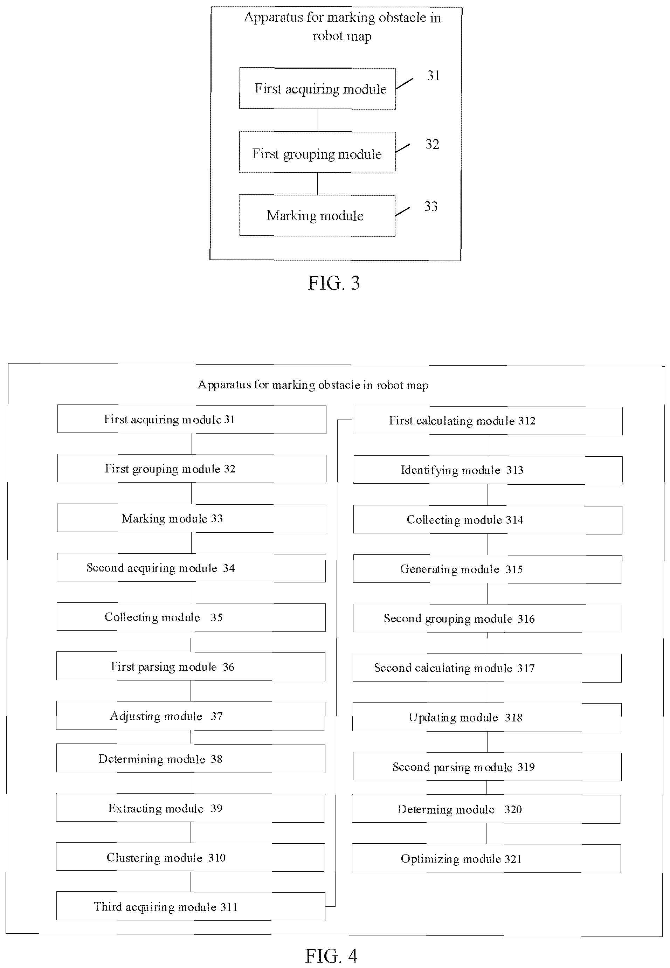

Further, as an implementation of the method shown in FIG. 1, an embodiment of the present application provides an apparatus for marking an obstacle in a robot map. As shown in FIG. 3, the apparatus includes a first acquiring module 31, a first grouping module 32, and a marking module 33.

The first acquiring module 31 is configured to acquire a probability map and a height map, the probability map being configured to identify a probability distribution of obstacles at various positions in a robot operating environment, and the height map being configured to identify a height distribution of the obstacles corresponding to the various positions in the robot operating environment.

The first grouping module 32 is configured to perform data grouping according to the probability map and the height map to obtain a plurality of data sets, each data set identifying obstacle information of an obstacle, the obstacle information including at least obstacle position information and obstacle edge information.

The marking module 33 is configured to mark the obstacle in the map according to the obstacle information.

Further, as shown in FIG. 4, the apparatus further includes:
a second acquiring module 34 configured to acquire an initial probability map and an initial height map of the obstacles;
a collecting module 35 configured to collect captured data of a robot during working;
a first parsing module 36 configured to parse the captured data captured by the capturing module to obtain obstacle data, the captured data including at least image data and height data;
an adjusting module 37 configured to adjust the initial probability map and the initial height map according to the obstacle data; and
a determining module 38 configured to determine the adjusted initial probability map as the probability map, and determine the adjusted initial height map as the height map.

Further, as shown in FIG. 4, the apparatus further includes:
an extracting module 39 configured to extract a plurality of candidate points in combination with the probability map and the height map and according to a preset probability threshold; and
a clustering module 310 configured to cluster the plurality of candidate points to obtain a plurality of groups of clustered data, each group of clustered data identifying one of the plurality of data sets.

Further, as shown in FIG. 4, the apparatus further includes:
a third acquiring module 311 configured to acquire a SLAM map of the robot operating environment, the SLAM map including an unknown region that identifies prohibition of a robot from passing;
a first calculating module 312 configured to calculate a first region area and a second region area respectively according to the SLAM map and the data set, the first region area being a largest continuous unknown region in the SLAM map, and the second region area being an obstacle floor area identified by the data set; and
an identifying module 313 configured to identify a floor-type obstacle according to the first region area and the second region area, where the robot is prohibited from shuttling inside and outside the floor-type obstacle.

Further, as shown in FIG. 4, the apparatus further includes:
a collecting module 314 configured to collect regions of which the second region area is less than a preset area threshold and which are adjacent in the SLAM map; and
a generating module 315 configured to generate a smallest circumscribed polygon corresponding to the collected regions, and determine a region identified by the smallest circumscribed polygon as the floor-type obstacle.

Further, as shown in FIG. 4, the apparatus further includes:
a second grouping module 316 configured to group according to positions of the candidate points in the groups of clustered data, and extract a first candidate point group, the first candidate point group including the largest number of candidate points;
a second calculating module 317 configured to calculate a smallest circumscribed rectangle corresponding to the candidate points in the first candidate point group; and
an updating module 318 configured to update each group of clustered data according to the smallest circumscribed rectangle for correcting the obstacle information identified by the clustered data.

Further, as shown in FIG. 4, the apparatus further includes a second parsing module 319. The second parsing module 319 is configured to parse the SLAM map to obtain an obstacle orientation.

The marking module 33 is configured to mark the obstacle in the map according to an obstacle position, an obstacle edge and the obstacle orientation.

Further, as shown in FIG. 4, the apparatus further includes:
a determining module 320 configured to, when second region areas have an overlap, determine whether the obstacles corresponding to the overlapped second region areas have an enclosing relationship according to the overlapped second region areas; and
an optimizing module 321 configured to, when the obstacles corresponding to the overlapped second region areas do not have the enclosing relationship, optimize the data sets of the obstacles corresponding to the overlapped second region areas.

Further, as shown in FIG. 4, the marking module 33 is configured to, when the obstacles corresponding to the overlapped second region areas have the enclosing relationship, mark the obstacle in the map according to the enclosing relationship and the obstacle information.

The present application provides a method and apparatus for marking an obstacle in a robot map. Compared with the prior art, the method according to the embodiment of the present application includes: acquiring a probability map and a height map, the probability map being configured to identify a probability distribution of obstacles at various positions in a robot operating environment, and the height map being configured to identify a height distribution of the obstacles corresponding to the various positions in the robot operating environment; performing data grouping according to the probability map and the height map to obtain a plurality of data sets, each data set identifying obstacle information of one obstacle, the obstacle information including at least obstacle position information and obstacle edge information; and marking the obstacle in the map according to the obstacle information. Therefore, the position information and edge information of the obstacle in the operating environment can be identified according to the obstacle's probability distribution and height distribution data in the robot operating environment, and the obstacle can be marked in the robot map according to the position information and edge information of the obstacle. Since the obstacle edge can identify whether the obstacle is a floor-type obstacle or a non-floor-type obstacle, the obstacle can be accurately marked in the robot map.

An embodiment of the present application provides a non-transitory storage medium configured to store at least one executable instruction therein. The computer executable instruction may be configured to implement the method for marking an obstacle in a robot map in any of the above method embodiments.

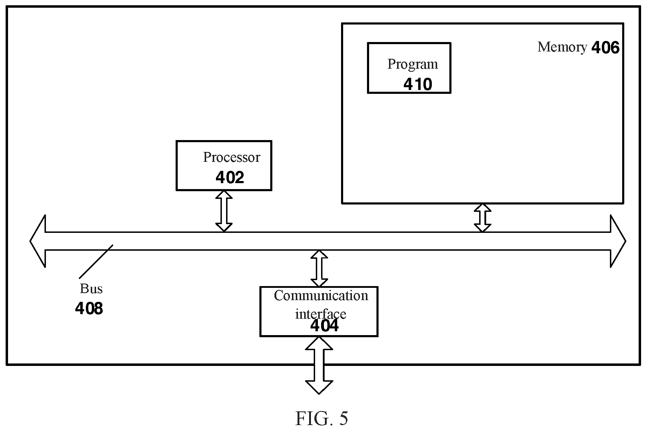

FIG. 5 shows a schematic structural diagram of a terminal according to an embodiment of the present application. The specific embodiment of the present application does not limit the specific implementation of the terminal.

As shown in FIG. 5, the terminal may include a processor 402, a communication interface 404, a memory 406 and a communication bus 408.

The processor 402, the communication interface 404 and the memory 406 complete communication with each other through the communication bus 408.

The communication interface 404 is configured to communicate with network elements of other devices, such as clients or other servers.

The processor 402 is configured to execute a program 410, and specifically, perform the relevant steps in the above embodiments of the method for marking an obstacle in a robot map.

Specifically, the program 410 may include program codes, which include computer operation instructions.

The processor 402 may be a central processing unit CPU, or an application specific integrated circuit (ASIC), or one or more integrated circuits configured to implement the embodiments of the present application. The terminal includes one or more processors, which may be of the same type, such as one or more CPUs. The processors may also be of different types, such as one or more CPUs and one or more ASICs.

The memory 406 is configured to store a program therein. The memory 406 may include a high-speed RAM memory, or may also include a non-volatile memory, such as at least one disk memory.

The program 410 may be specifically configured to cause the processor 402 to implement the method for marking an obstacle in a robot map as described in any of the above embodiments.

Obviously, a person skilled in the art should understand that the above-mentioned modules or steps of the present application can be implemented by a general computing device. They can be concentrated on a single computing apparatus or distributed on a network composed of a plurality of computing apparatuses. Optionally, they can be implemented by program codes executable by the computing apparatus, and thus can be stored in a storage apparatus to be executed by a computing apparatus. In addition, in some cases, the steps shown or described can be performed in a different order than here, or can be made into individual integrated circuit modules, or a plurality of modules or steps can be made into a single integrated circuit module. Therefore, the present application is not limited to any specific hardware and software combination.

The foregoing content is only preferred embodiments of the present application, but not intended to limit the present application. Various alterations or changes may be made to the present application for a person skilled in the art. Thus, any modification, equivalent replacement, improvement and so on made within the spirit and principle of the present application shall be encompassed by the protection scope of the present application.

## Claims

1. A method for marking an obstacle in a robot map, comprising:
acquiring a probability map and a height map, the probability map being configured to identify a probability distribution of obstacles at various positions in a robot operating environment, and the height map being configured to identify a height distribution of the obstacles corresponding to the various positions in the robot operating environment;
performing data grouping according to the probability map and the height map to obtain a plurality of data sets, each data set identifying obstacle information of an obstacle, the obstacle information comprising at least obstacle position information and obstacle edge information; and
marking the obstacle in the map according to the obstacle information.

2. The method according to claim 1, further comprising:
acquiring an initial probability map and an initial height map of the obstacles;
collecting captured data of a robot during working and parsing the captured data to obtain obstacle data, the captured data comprising at least image data and height data; and
adjusting the initial probability map and the initial height map according to the obstacle data, determining the adjusted initial probability map as the probability map, and determining the adjusted initial height map as the height map.

3. The method according to claim 1, further comprising:
extracting a plurality of candidate points in combination with the probability map and the height map and according to a preset probability threshold;
wherein performing data grouping according to the probability map and the height map to obtain the plurality of data sets comprises:
clustering the plurality of candidate points to obtain a plurality of groups of clustered data, each group of clustered data identifying one of the plurality of data sets.

4. The method according to claim 1 or 3, further comprising:
acquiring a SLAM map of the robot operating environment, the SLAM map comprising an unknown region that identifies prohibition of a robot from passing;
calculating a first region area and a second region area respectively according to the SLAM map and the data set, the first region area being a largest continuous unknown region in the SLAM map, and the second region area being an obstacle floor area identified by the data set; and
identifying a floor-type obstacle according to the first region area and the second region area, wherein the robot is prohibited from shuttling inside and outside the floor-type obstacle.

5. The method according to claim 4, further comprising:
collecting regions of which the second region area is less than a preset area threshold and which are adjacent in the SLAM map; and
generating a smallest circumscribed polygon corresponding to the collected regions, and determining a region identified by the smallest circumscribed polygon as the floor-type obstacle.

6. The method according to claim 3, further comprising:
grouping according to positions of the candidate points in the groups of clustered data, and extracting a first candidate point group, the first candidate point group comprising a largest number of candidate points;
calculating a smallest circumscribed rectangle corresponding to the candidate points in the first candidate point group; and
updating each group of clustered data according to the smallest circumscribed rectangle for correcting the obstacle information identified by the clustered data.

7. The method according to claim 4, further comprising:
parsing the SLAM map to obtain an obstacle orientation; and
marking the obstacle in the map according to the obstacle information comprises:
marking the obstacle in the map according to an obstacle position, an obstacle edge and the obstacle orientation.

8. The method according to claim 4, further comprising:
when second region areas have an overlap, determining whether the obstacles corresponding to the overlapped second region areas have an enclosing relationship according to the overlapped second region areas; and
when the obstacles corresponding to the overlapped second region areas do not have the enclosing relationship, optimizing the data sets of the obstacles corresponding to the overlapped second region areas.

9. The method according to claim 8, wherein marking the obstacle in the map according to the obstacle information comprises:
when the obstacles corresponding to the overlapped second region areas have the enclosing relationship, marking the obstacle in the map according to the enclosing relationship and the obstacle information.

10. An apparatus for marking an obstacle in a robot map, comprising:
a first acquiring module configured to acquire a probability map and a height map, the probability map being configured to identify a probability distribution of obstacles at various positions in a robot operating environment, and the height map being configured to identify a height distribution of the obstacles corresponding to the various positions in the robot operating environment;
a first grouping module configured to perform data grouping according to the probability map and the height map to obtain a plurality of data sets, each data set identifying obstacle information of an obstacle, the obstacle information comprising at least obstacle position information and obstacle edge information; and
a marking module configured to mark the obstacle in the map according to the obstacle information.

11. The apparatus according to claim 10, further comprising:
a second acquiring module configured to acquire an initial probability map and an initial height map of the obstacles;
a collecting module configured to capture captured data of a robot during working;
a first parsing module configured to parse the captured data captured by the capturing module to obtain obstacle data, the captured data comprising at least image data and height data;
an adjusting module configured to adjust the initial probability map and the initial height map according to the obstacle data; and
a determining module configured to determine the adjusted initial probability map as the probability map, and determine the adjusted initial height map as the height map.

12. The apparatus according to claim 10, further comprising:
an extracting module configured to extract a plurality of candidate points in combination with the probability map and the height map and according to a preset probability threshold; and
a clustering module configured to cluster the plurality of candidate points to obtain a plurality of groups of clustered data, each group of clustered data identifying one of the plurality of data sets.

13. The apparatus according to claim 10 or 12, further comprising:
a third acquiring module configured to acquire a SLAM map of the robot operating environment, the SLAM map including an unknown region that identifies prohibition of a robot from passing;
a first calculating module configured to calculate a first region area and a second region area respectively according to the SLAM map and the data set, the first region area being a largest continuous unknown region in the SLAM map, and the second region area being an obstacle floor area identified by the data set; and
an identifying module configured to identify a floor-type obstacle according to the first region area and the second region area, wherein the robot is prohibited from shuttling inside and outside the floor-type obstacle.

14. The apparatus according to claim 13, further comprising:
a collecting module configured to collect regions of which the second region area is less than a preset area threshold and which are adjacent in the SLAM map; and
a generating module configured to generate a smallest circumscribed polygon corresponding to the collected regions, and determine a region identified by the smallest circumscribed polygon as the floor-type obstacle.

15. The apparatus according to claim 12, further comprising:
a second grouping module configured to group according to positions of the candidate points in the groups of clustered data, and extract a first candidate point group, the first candidate point group including a largest number of candidate points;
a second calculating module configured to calculate a smallest circumscribed rectangle corresponding to the candidate points in the first candidate point group; and
an updating module configured to update each group of clustered data according to the smallest circumscribed rectangle for correcting the obstacle information identified by the clustered data.

16. The apparatus according to claim 13, further comprising:
a second parsing module configured to parse the SLAM map to obtain an obstacle orientation; wherein
the marking module is configured to mark the obstacle in the map according to an obstacle position, an obstacle edge and the obstacle orientation.

17. The apparatus according to claim 13, further comprising:
a determining module configured to, when second region areas have an overlap, determine whether the obstacles corresponding to the overlapped second region areas have an enclosing relationship according to the overlapped second region areas; and
an optimizing module configured to, when the obstacles corresponding to the overlapped second region areas do not have the enclosing relationship, optimize the data sets of the obstacles corresponding to the overlapped second region areas.

18. The apparatus according to claim 17, wherein,
the marking module is configured to, when the obstacles corresponding to the overlapped second region areas have the enclosing relationship, mark the obstacle in the map according to the enclosing relationship and the obstacle information.

19. A non-transitory storage medium configured to store at least one executable instruction therein, wherein the at least one executable instruction causes a processor to perform operations corresponding to the method for marking an obstacle in a robot map according to any one of claims 1 to 9.

20. A terminal, comprising a processor, a memory, a communication interface and a communication bus, wherein the processor, the memory and the communication interface complete communication with each other through the communication bus; and
the memory is configured to store at least one executable instruction, the at least one executable instruction causing the processor to perform operations corresponding to the method for marking an obstacle in a robot map according to any one of claims 1 to 9.
